# EUROPEAN PATENT SPECIFICATION

(11) **EP 3 113 516 B1**
(45) Date of publication and mention of the grant of the patent: **31.05.2023**
(21) Application number: 15175140.1
(22) Date of filing: 02.07.2015
(51) Int. Cl.: H04R 25/00

(54) **HEARING DEVICE AND METHOD OF UPDATING SECURITY SETTINGS OF A HEARING DEVICE**
HÖRGERÄT UND VERFAHREN ZUR AKTUALISIERUNG DER SICHERHEITSEINSTELLUNGEN EINES HÖRGERÄTES
DISPOSITIF AUDITIF ET PROCÉDÉ DE MISE À JOUR DES PARAMÈTRES DE SÉCURITÉ D'UN DISPOSITIF AUDITIF

(43) Date of publication of application: 04.01.2017
(60) Divisional application: 23168454.9
(73) Proprietor: GN Hearing A/S, 2750 Ballerup (DK)
(72) Inventor: PEDERSEN, Brian Dam, DK-4100 Ringsted (DK); VENDELBO, Allan Munk, DK-2500 Valby (DK)
(74) Representative: GN Store Nord A/S

(56) References cited:
- EP-A1- 1 763 946
- EP-A1- 2 760 225
- US-A1- 2005 154 889
- US-A1- 2006 078 124
- US-A1- 2012 110 333
- US-A1- 2014 229 737
- MENEZES A J ET AL: "Handbook of Applied Cryptography , Key Management Techniques", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 542 - 590, XP002225610, ISBN: 978-0-8493-8523-0 * pages 576,578 - page 581; figure 13.10 *

## Description

The present disclosure relates to a hearing device and a method of updating a hearing device, in particular a method of updating security settings of a hearing device.

### BACKGROUND

Functionalities of a hearing device become increasingly advanced. Wireless communication between a hearing device and external devices, such as hearing device fitting apparatus, tablets, smart phones and remote controllers, has evolved. A wireless communication interface of a hearing device uses an open standard-based interface. However, this poses many challenges in terms of security. A hearing device may assume any incoming data as legitimate, and may allow memory to be written or changed by an unauthorized party. Any such attacks may result in a malfunction of the hearing aid, or a battery exhaustion attack.

EP 2 760 225 A1 relates to location based assistance using hearing instruments. A method of authentication is disclosed, the method comprising monitoring for the presence of a hearing instrument; responsive to detecting the hearing instrument: establishing a short-range wireless communication session with the hearing instrument; determining an identity of the hearing instrument wearer; and responsive to determining the identity of the wearer, setting a value indicating that the hearing instrument wearer is authenticated with and within the wireless range of the presence device.

"Handbook of Applied Cryptography", by Menezes, A J, et al, CPC Press, 1997, ISBN 978-0-8493-8523-0, describes in Chapter 13.7 key life cycle issues and the necessity for key updates when cryptoperiods are used.

US 2005/0154889 A1 relates to a method and system for a flexible lightweight public-key-based mechanism for the GSS protocol.

US 2012/0110333 A1 relates to software security and in particular to software revocation and updating and software signing.

EP 1 763 946 A1 relates to systems and methods for efficient authentication of medical wireless ad hoc network nodes.

US 2014/0229737 A1 relates to federated key management and discloses a system that uses information submitted in connection with a request to determine if and how to process the request.

### SUMMARY

There is a need for hearing device and method providing improved security for hearing device communication. Further, there is a need for devices and methods reducing the risk of a hearing aid and hearing aid function being compromised by a third party.

According to the invention as set out in claim 1 a hearing device comprising a processing unit configured to compensate for hearing loss of a user of the hearing device; a memory unit; and an interface. The hearing device is configured to operate according to security settings of the hearing device, the security settings of the hearing device being stored in the memory unit, wherein the security settings comprise primary security settings including a hearing device certificate, the hearing device certificate comprising a plurality of hearing device keys and a first hearing device key identifier. The processing unit is configured to obtain, e.g. receive from a client device, new security settings via the interface, the new security settings comprising a new first hearing device key identifier indicative of a hearing device key. The processing unit is configured to verify the new security settings based on the primary security settings of the hearing device, wherein to verify the new security settings comprises to validate the new first hearing device key identifier, wherein to verify the new security settings comprises to determine if the new first hearing device key identifier is valid based on the first hearing device key identifier, wherein the new first hearing device key identifier is not valid if the new first hearing device key identifier is smaller than the first hearing device key identifier of the hearing device certificate; and update, if the new security settings are verified, the security settings of the hearing device based on the new security settings, wherein to update the security settings of the hearing device comprises to include the new first hearing device key identifier in the security settings of the hearing device by storing the new first hearing device key identifier as a current first hearing device key identifier in secondary security settings of the security settings.

According to the invention as set out in claim 8 a method of updating a hearing device comprising a processing unit configured to compensate for hearing loss of a user of the hearing device, a memory unit, and an interface, wherein the hearing device is configured to operate according to security settings of the hearing device, the security settings of the hearing device being stored in the memory unit, and wherein the security settings comprise primary security settings including a hearing device certificate, the hearing device certificate comprising a plurality of hearing device keys and a first hearing device key identifier. The method comprises obtaining new security settings via the interface, the new security settings comprising a new first hearing device key identifier indicative of a hearing device key; verifying the new security settings based on the primary security settings of the hearing device, wherein verifying the new security settings comprises validating the new first hearing device key identifier, wherein verifying the new security settings comprises determining if the new first hearing device key identifier is valid based on the first hearing device key identifier of the primary security settings, wherein the new first hearing device key identifier is not valid if the new first hearing device key identifier is smaller than the first hearing device key identifier of the hearing device certificate; and updating, if the new security settings are verified, the security settings of the hearing device based on the new security settings, wherein updating the security settings of the hearing device comprises to include the new first hearing device key identifier in the security settings of the hearing device by storing the new first hearing device key identifier as a current first hearing device key identifier in secondary security settings of the security settings.

The method and apparatus as disclosed provides the possibility of remotely controlling which hearing device key(s) a hearing device uses for secure communication with external devices, such as fitting devices and/or client devices.

Further, a hearing device manufacturer may be able to prevent certain device types and/or specific devices to access and/or communicate with the hearing device by appropriate selection of the new security settings, which is advantageous if an external device, such as a fitting device, is e.g. stolen, compromised, or otherwise end up in the wrong hands.

Advantageously, the method and hearing device enable the hearing device manufacturer to control client device access to the hearing device and/or enable version control in client device access to the hearing device. Further, a hearing device manufacturer is able to securely update information about security-related keys or keying material. Also, a hearing device manufacturer is able to securely update information about client device types, client devices and/or signing device identifiers that should not be trusted anymore.

The method and apparatus as disclosed provide scalable security architecture for hearing device systems with improved security. The disclosed hearing device and method support a hearing device in combatting attacks such as unauthorized access or control of a hearing device, while still allowing access to legitimate parties such as a client device, for e.g. fitting purposes, update purposes, maintenance purposes. Further, the need for updating and/or exchange of keys in case a key has been compromised at a client device has been reduced and simplified.

### BRIEF DESCRIPTION OF THE DRAWINGS

The above and other features and advantages will become readily apparent to those skilled in the art by the following detailed description of exemplary embodiments thereof with reference to the attached drawings, in which:
- Fig. 1: schematically illustrates an exemplary architecture with a hearing device,
- Fig. 2: schematically illustrates an exemplary hearing device,
- Fig. 3: schematically illustrates an exemplary hearing device certificate,
- Fig. 4: schematically illustrates an exemplary security settings certificate,
- Fig. 5: schematically illustrates an exemplary security settings certificate,
- Fig. 6: schematically illustrates an exemplary signalling diagram,
- Fig. 7: schematically illustrates a flowchart of an exemplary method,
- Fig. 8: schematically illustrates a flowchart of a part of an exemplary method, and
- Fig. 9: schematically illustrates a flowchart of a part of an exemplary method.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described. Throughout, the same reference numerals are used for identical or corresponding parts.

The present disclosure relates to improved security in hearing device communication. - Namely, the client device disclosed herein enables hearing device communication that is robust against security threats, vulnerabilities and attacks by implementing appropriate safeguards and countermeasures, such as security mechanisms, to protect against threats and attacks. The present disclosure relates to hearing device communication that is robust against replay attacks, unauthorized access, battery exhaustion attacks, and man-in-the-middle attacks.

As used herein, the term "hearing device" refers to a device configured to assist a user in hearing a sound, such as a hearing instrument, a hearing aid device, a headset, a pair of headphones, etc.

As used herein, the term "certificate" refers to a data structure that enables verification of its origin and content, such as verifying the legitimacy and/or authenticity of its origin and content. The certificate is configured to provide a content that is associated to a holder of the certificate by an issuer of the certificate. The certificate comprises a digital signature, so that a recipient of the certificate is able to verify or authenticate the certificate content and origin. The certificate may comprise one or more identifiers and/or keying material, such as one or more cryptographic keys (e.g. a hearing device key) enabling secure communication in a hearing device system. The certificate permits thus to achieve authentication of origin and content, non-repudiation, and/or integrity protection. The certificate may further comprise a validity period, one or more algorithm parameters, and/or an issuer. A certificate may comprise a digital certificate, a public key certificate, an attribute certificate, and/or an authorization certificate. Examples of certificates are X.509 certificates, and Secure/Multipurpose Internet Mail Extensions, S/MIME, certificates, and/or Transport Layer Security, TLS, certificates.

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. In asymmetric cryptography or public key cryptography, a keying material is a key pair, so called a private-public key pair comprising a public key and a private key. In an asymmetric or public key cryptosystem (such as Rivest Shamir Adelman, RSA, cryptosystem), the public key is used for encryption and/or signature verification while the private key is used for decryption and/or signature generation. A hearing device key may be keying material allowing derivation of one or more symmetric keys, such as a session key and/or a certificate key for hearing device communication. Hearing device key(s) may be stored in a memory unit of the hearing device, e.g. during manufacture and/or as part of primary security settings/hearing device certificate. A hearing device key may comprise keying material that is used to derive a symmetric key. The hearing device key comprises for example an Advanced Encryption Standard, AES, key , such as an AES-128 bits key.

As used herein the term "identifier" refers to a piece of data that is used for identifying, such as for categorizing and/or uniquely identifying. The identifier may be in a form of a word, a number, a letter, a symbol, a list, an array or any combination thereof. For example, the identifier as a number may be in the form of an integer, such as unsigned integer, uint, with a length of e.g. 8 bits, 16 bits, 32 bits, etc., such as an array of unsigned integers.

The present disclosure relates to a hearing device. The hearing device comprises a processing unit, a memory unit and an interface. The memory unit may include removable and non-removable data storage units including, but not limited to, Read Only Memory (ROM), Random Access Memory (RAM), etc.The hearing device may comprise a processing unit configured to compensate for hearing loss of a user of the hearing device. The interface may comprise a wireless transceiver, e.g. configured for wireless communication at frequencies in the range from 2.4 to 2.5 GHz. In one or more exemplary hearing devices, the interface is configured for communication, such as wireless communication, with a client device or a hearing device, respectively comprising a wireless transceiver configured to receive and/or transmit data.

The hearing device is configured to operate according to security settings of the hearing device, the security settings of the hearing device being stored in the memory unit. The security settings comprise primary security settings including a hearing device certificate. The hearing device is configured to verify the new security settings based on the primary security settings of the hearing device, e.g. based on the hearing device certificate or at least parts thereof.

The hearing device certificate comprises a hearing device identifier, at least one hearing device key identifier indicative of a hearing device key, and a plurality of hearing device keys. A hearing device key identifier of the hearing device certificate may be indicative of which hearing device key(s) is/are part of the hearing device certificate. For example, a first hearing device key identifier having the value of "5" indicates that the hearing device certificate includes a first hearing device key with identifier "5", and optionally increments and/or decrements of the identifier, such as hearing device keys with identifiers "6", "7", "8" etc. depending on the number of hearing device keys in the certificate. For example, a hearing device key identifier points to and/or identifies a hearing device key of the hearing device certificate.

The hearing device certificate may comprise a certificate type identifier. The certificate type identifier may indicate a type of the certificate amongst a variety of certificate types, such as a hearing device family certificate type, a hearing device certificate type, a firmware certificate type, a research and development certificate type, client device certificate type. The certificate type identifier may be used by the hearing device to identify what type of certificate the hearing device receives, stores, authenticates and/or retrieves. The hearing device certificate may comprise a version identifier indicative of a data format version of the certificate. The hearing device may use the certificate type identifier and/or the version identifier to determine what type of data the certificate comprises and/or what type of data is comprised in a field of the certificate. For example, the hearing device may determine based on the certificate type identifier and/or version identifier what field of the certificate comprises a digital signature and/or which public key is needed to verify the digital signature of the certificate. It may be envisaged that there is a one-to-one mapping between the certificate type identifier and the public-private key pair.

The hearing device certificate may comprise a signing device identifier. The signing device identifier refers to a unique identifier identifying the device that has signed the hearing device certificate, such as a manufacturing device, e.g. an integrated circuit card, a smart card, a hardware security module. The signing device identifier may for example comprise a medium access control, MAC, address of the signing device and/or a serial number of the signing device. The signing device identifier may allow for example the hearing device to determine whether the signing device is e.g. black-listed or not, and thus to reject certificates signed by a signing device that has been black-listed, e.g. due to theft or other corruption.

The hearing device certificate may comprise one or more hardware identifiers, for example a first hardware identifier and/or a second hardware identifier. A hardware identifier may identify a piece of hardware comprised in the hearing device, such as a radio chip comprised in the hearing device or a digital signal processor of the hearing device. The hardware identifier(s) may be stored in a register of the piece of hardware comprised in the hearing device during manufacturing of the piece of hardware. The hardware identifier may comprise a serial number of the hardware, a chip identifier, or any combination thereof. The hearing device receiving or retrieving from the memory unit the hearing device certificate comprising the hardware identifier may verify the hearing device certificate by comparing its stored hardware identifier and the corresponding hardware identifier comprised in the hearing device certificate. Such verification may be performed upon reception of the hearing device certificate, and/or upon retrieval of the hearing device certificate from the memory unit, such as at boot or power-on of the hearing device.

The security settings of the hearing device comprise secondary security settings. The secondary security settings may comprise security parameters for the hearing device, for example security parameters that are updated after manufacture, such as updated/current hearing device key identifiers, revocation identifiers, security update identifier. The hearing device may be configured to verify the new security settings based on the secondary security settings of the hearing device. The secondary security settings or at least parts thereof may be set in firmware or set by previously received new security settings/security settings certificates.

The processing unit is configured to obtain new security settings via the interface. The new security settings may comprise a security settings certificate. The new security settings comprise a new first hearing device key identifier indicative of a hearing device key. The new security settings may comprise one or more, e.g. a plurality of, new hearing device key identifiers indicative of a respective hearing device key. For example, the new security settings may comprise a new second hearing device key identifier indicative of a second hearing device key. The new security settings may comprise a new third hearing device key identifier indicative of a third hearing device key. The new security settings may comprise a new fourth hearing device key identifier indicative of a fourth hearing device key. The new hearing device key identifier(s) may be included in the security settings certificate.

The new security settings, such as the security settings certificate, may comprise a digital signature. To verify the new security settings may comprise to verify the digital signature of the new security settings. The digital signature enables a proof or verification of authenticity of the security settings certificate, such as verification of the signer legitimacy. The digital signature is optionally generated, e.g. by a manufacturing device, using a security settings private key. The digital signature is verifiable by the hearing device using a corresponding security settings public key. If the digital signature is not successfully verified using the alleged public key, the hearing device may disregard the new security setting/security settings certificate and/or abort update of the security settings of the hearing device. For example, the new security settings comprise a digital signature appended to it to protect integrity of the new security settings. Verifying a digital signature comprises e.g. computing a comparison result based on the digital signature and a corresponding security settings public key and comparing the comparison result to the received security settings/security settings certificate. The corresponding security settings public key may be retrieved by the hearing device from the memory unit, a remote data storage unit, and/or the server device. The digital signature may be verified as valid, or the verification is successful when the digital signature raised to the power of the security settings public key is identical to the received new security settings. This may provide the advantage that the hearing device rejects a security settings certificate that is tampered or received from unauthenticated parties. The communication with the hearing device may thus be robust against impersonation, modification and masquerading attacks.

The security settings certificate may comprise a certificate type identifier. The certificate type identifier may indicate a type of the certificate amongst a variety of certificate types, such as a hearing device family certificate type, a hearing device certificate type, a firmware certificate type, a research and development certificate type, client device certificate type and/or a security settings certificate. The certificate type identifier may be used by the hearing device to identify what type of certificate the hearing device receives, stores, authenticates and/or retrieves. The security settings certificate may comprise a version identifier indicative of a data format version of the certificate. The hearing device may use the certificate type identifier and/or the version identifier to determine what type of data the certificate comprises and/or what type of data is comprised in a field of the certificate. For example, the hearing device may determine based on the certificate type identifier and/or version identifier what field of the certificate comprises a digital signature and/or which public key is needed to verify the digital signature of the certificate. It may be envisaged that there is a one-to-one mapping between the certificate type identifier and the public-private key pair.

The security settings certificate may comprise a signing device identifier. The signing device identifier refers to a unique identifier identifying the device that has signed the security settings certificate, such as a manufacturing device, e.g. an integrated circuit card, a smart card, a hardware security module. The signing device identifier may for example comprise a medium access control, MAC, address of the signing device and/or a serial number of the signing device. The signing device identifier may allow for example the hearing device to determine whether the signing device is e.g. black-listed or not, and thus to reject certificates signed by a signing device that has been black-listed, e.g. due to theft or other corruption.

The new security settings may comprise a security update identifier. For example, the security settings certificate may comprise the security update identifier. To verify the new security settings may comprise to determine if the security update identifier is valid based on the secondary security settings, e.g. based on a current security update identifier of the secondary security settings. For example, the secondary security settings may comprise a current security update identifier stored during the last security settings update. The security update identifier may be valid if the security update identifier of the new security settings is indicative of a more recent security update, e.g. if the security update identifier of the new security settings is larger than the current security update identifier stored in the secondary security settings. The security update identifier may be indicative of the order of security settings updates and/or the number of security updates. The security update identifier enables the hearing device to verify that the new security settings are the latest available security settings or at least later than the current security settings. Thus, a security update with outdated security settings can be prevented.

The new security settings may comprise a client device type revocation identifier and/or a list of client device type revocation identifiers. For example, the security settings certificate may comprise the client device type revocation identifier and/or the list of client device type revocation identifiers. A client device type revocation identifier is indicative of a client device type that is not allowed to communicate with the hearing device. By including one or more client device type revocation identifiers in the new security settings, a manufacturer or sender of the security settings certificate is able to black-list a client device type or group of client devices. Thus, the hearing device manufacturer is able to prevent one or more client device types to communicate with the hearing device.

The new security settings may comprise a client device revocation identifier and/or a list of client device revocation identifiers. For example, the security settings certificate may comprise the client device revocation identifier and/or the list of client device revocation identifiers. A client device revocation identifier is indicative of a client device that is not allowed to communicate with the hearing device. By including one or more client device revocation identifiers in the new security settings, a manufacturer or sender of the security settings certificate is able to black-list a specific client device. Thus, the hearing device manufacturer is able to prevent one or more specific client devices to communicate with the hearing device.

The new security settings may comprise a signing device revocation identifier and/or a list of signing device revocation identifiers. For example, the security settings certificate may comprise the signing device revocation identifier and/or the list of signing device revocation identifiers. A signing device revocation identifier is indicative of a signing device that is not allowed to sign certificates for the hearing device. By including one or more signing device revocation identifiers in the new security settings, a manufacturer or sender of the security settings certificate is able to black-list a specific signing device. Thus, the hearing device manufacturer is able to prevent the use of a black-listed signing device for attacking the hearing device.

The hearing device is configured to operate according to security settings of the hearing device. The security settings of the hearing device comprise primary security settings including a hearing device certificate. The primary security settings, e.g. the hearing device certificate, may be stored in a read-only part of the memory unit. The hearing device may be configured to verify the new security settings based on the primary security settings, such as the hearing device certificate, of the hearing device. The primary security settings, such as the hearing device certificate, may comprise one or more hearing device key identifiers and two or or more hearing device keys. The primary security settings, such as the hearing device certificate, comprise a first hearing device key identifier.

The processing unit is configured to verify the new security settings or determine if a verification criterion is fulfilled. To verify the new security settings may comprise verifying one or more identifiers of the new security settings and/or the security settings certificate. The new security settings may then be verified or at least partly verified if the evaluated identifier(s) is/are valid.

To verify the new security settings comprises to validate one or more new hearing device key identifiers, including the new first hearing device key identifier, of the new security settings/security settings certificate. The new security settings may then be verified or at least partly verified if one of, some of or all the one or more new hearing device key identifiers are valid. To verify the new security settings comprises to determine if the new first hearing device key identifier is valid based on the first hearing device key identifier of the primary security settings/hearing device certificate. The new first hearing device key identifier is not valid if the new first hearing device key identifier is smaller than the first hearing device key identifier of the hearing device certificate. In one or more exemplary hearing devices, the new first hearing device key identifier is not valid if the new first hearing device key identifier is smaller than a current first hearing device key identifier of the secondary security settings. In one or more exemplary hearing devices, the new first hearing device key identifier is valid if the new first hearing device key identifier is larger than or equal to the first hearing device key identifier of the hearing device certificate. In one or more exemplary hearing devices, the new first hearing device key identifier is valid if the new first hearing device key identifier is larger than or equal to a current first hearing device key identifier of the secondary security settings.

To verify the new security settings/security settings certificate may comprise to verify the certificate type identifier of the new security settings/security settings certificate, e.g. to verify that the hearing device/hearing device firmware supports the received security settings certificate.

To verify the new security settings/security settings certificate may comprise to verify that the signing device identifier of the security settings certificate is not black-listed, e.g. identified on list with current signing device revocation identifier(s) of secondary security settings.

To verify the new security settings/security settings certificate may comprise to verify that the version identifier of the new security settings/security settings certificate is valid. In one or more exemplary hearing devices, the version identifier of the new security settings is valid if the version identifier is supported by firmware of the hearing device.

The new security settings may comprise a plurality of new hearing device key identifiers and to verify the new security settings may comprise to validate the plurality of new hearing device key identifiers, and wherein the new security settings are verified if the plurality of new hearing device key identifiers is valid.

The processing unit is configured to update, if the new security settings are verified, the security settings of the hearing device. To update the security settings of the hearing device comprises to include/store the new security settings or at least parts thereof as security settings of the hearing device, such as the secondary security settings.

To update the security settings of the hearing device may comprise to include/store the new first hearing device key identifier and/or a plurality of new hearing device key identifiers in security settings of the hearing device, such as the secondary security settings. The new first hearing device key identifier is stored as current first hearing device key identifier of the secondary security settings, e.g. by over-writing a previously stored current first hearing device key identifier. To update the security settings of the hearing device may comprise to determine a future first hearing device key identifier based on the new first hearing device key identifier and/or the first hearing device key identifier of the hearing device certificate, and to store the future first hearing device key identifier as current first hearing device key identifier in the secondary security settings. To update the security settings of the hearing device may comprise to determine a future first hearing device key identifier based on a current first hearing device key identifier of the secondary security settings. In one or more exemplary hearing devices a future first hearing device key identifer is determined by setting the future first hearing device key identifer to the current first hearing device key identifier of the secondary security settings (i.e. no update), if the new first hearing device key identifier has a default value, e.g. zero. In one or more exemplary hearing devices a future first hearing device key identifer is determined by setting the future first hearing device key identifer to the new first hearing device key identifier, if the new first hearing device key identifier is larger than or equal to the current first hearing device key identifier and is indicative of a first hearing device key of the security settings. In one or more exemplary hearing devices, a future first hearing device key identifer is determined by setting the future first hearing device key identifer to correspond to a hearing device key identifier indicative of the last first hearing device key of the security settings, if the new first hearing device key identifier is larger than or equal to the first hearing device key identifier of the primary security settings and is indicative of a first hearing device key not present in the primary security settings. The above examples of to update current first hearing device key identifier of secondary security settings may also apply to update of current second, third and/or fourth hearing device key identifier of the secondary security settings.

To update the security settings of the hearing device may comprise to store the security update identifier of the new security settings. The security update identifier of the new security settings may be stored as current security update identifier of the secondary security settings, e.g. by over-writing a previously stored current security update identifier.

To update the security settings of the hearing device may comprise to update a client device type revocation identifier and/or a list of client device type revocation identifiers of the security settings, e.g. by storing client device type identifier(s) of the new security settings/security settings certificate in security settings of the hearing device, such as the secondary security settings. To update the security settings of the hearing device may comprise to delete previously stored client device type revocation identifier(s) from the secondary security settings.

To update the security settings of the hearing device may comprise to update a client device revocation identifier and/or a list of client device revocation identifiers of the security settings, e.g. by storing client device revocation identifier(s) of the new security settings/security settings certificate in security settings of the hearing device, such as the secondary security settings. To update the security settings of the hearing device may comprise to delete previously stored client device revocation identifier(s) from the secondary security settings.

To update the security settings of the hearing device may comprise to update a signing device revocation identifier and/or a list of signing device revocation identifiers of the security settings, e.g. by storing signing device revocation identifier(s) of the new security settings/security settings certificate in security settings of the hearing device, such as the secondary security settings. To update the security settings of the hearing device may comprise to delete previously stored signing device revocation identifier(s) from the secondary security settings. Deletion of previously stored identifiers provides efficient use of the limited memory capacity of a hearing device.

In the method, verifying the new security settings may comprise verifying the digital signature of the new security settings/security settings certificate. Verifying the new security settings may comprise validating the new first hearing device key identifier, and wherein the new security settings are verified or at least partly verified if the new first hearing device key identifier is valid.

In the method, the security settings of the hearing device comprise primary security settings including a hearing device certificate. Verifying the new security settings is based on the primary security settings of the hearing device. The primary security settings comprise a first hearing device key identifier, and verifying the new security settings comprises determining if the new first hearing device key identifier is valid based on the first hearing device key identifier of the primary security settings.

In the method, the security settings of the hearing device comprises secondary security settings, and verifying the new security settings may be based on the secondary security settings of the hearing device. In one or more exemplary methods, the new first hearing device key identifier is valid if the new first hearing device key identifier is larger than or equal to the first hearing device key identifier of the hearing device certificate and larger than or equal to a current first hearing device key identifier of the secondary security settings.

In the method, the new security settings may comprise a security update identifier, and verifying the new security settings may comprise determining if the security update identifier is valid based on the secondary security settings, such as a current security update identifier of the secondary security settings.

In the method, updating the security settings of the hearing device may comprises including the new first hearing device key identifier in the secondary security settings.

In the method, the new security settings may comprise one or more client device type revocation identifiers and/or one or more client device revocation identifiers, and/or one or more signing device revocation identifiers. Updating the security settings of the hearing device may comprise updating one or more client device type revocation identifiers and/or one or more client device revocation identifiers, and/or one or more signing device revocation identifiers, e.g. in secondary security settings of the hearing device.

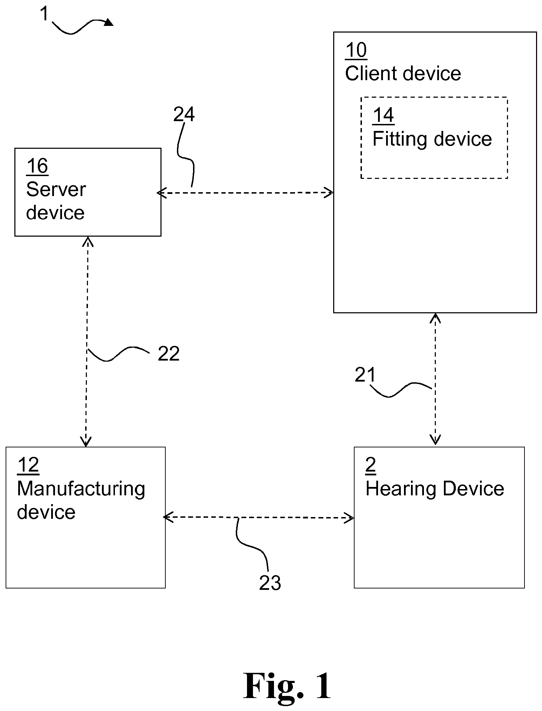

Fig. 1 schematically illustrates exemplary devices that may be used for manufacturing, maintenance/update of, and/or operating a hearing device 2. Fig. 1 shows an exemplary system 1 and a hearing device 2. The system 1 may comprise one or more of a manufacturing device 12, a client device 10, and a server device 16 for manufacturing, maintenance/update of, and/or operating the hearing device 2 optionally including but not limited to updating security settings of the hearing device. The manufacturing device 12 may be configured to transmit/install a hearing device certificate in the hearing device. The hearing device 2 may be configured to compensate for hearing loss of a user of the hearing device 2. The hearing device 2 may be configured to communicate with the manufacturing device 12 using e.g. a communication link 23, such as a uni or bi-directional communication link. The communication link 23 may be a wired link and/or wireless communication link. The communication link 23 may be a single hop communication link or a multi-hop communication link. The wireless communication link may be carried over a short-range communication system, such as Bluetooth, Bluetooth low energy, IEEE 802.11, Zigbee. The hearing device 2 may be configured to receive a hearing device certificate from the manufacturing device 12 and to store the hearing device certificate in a memory unit comprised in the hearing device 2, e.g. as part of primary security settings. Alternatively or additionally, the manufacturing device 12 may store the hearing device certificate directly in the memory unit of the hearing device. For example, the manufacturing device 12 may write the hearing device certificate in the memory unit. For example, during manufacturing of the hearing device 2, the manufacturing device 12 connects to the hearing device 2 and transmits the hearing device certificate to the hearing device 2. The hearing device may receive and store the hearing device certificate. The hearing device 2 may then use the material provided in the hearing device certificate to secure communications with client devices when needed, i.e. the hearing device certificate may form part of security settings, such as primary security settings of the hearing device. The hearing device 2 may be configured to connect to the client device 10 via a communication link 21, such as a bidirectional communication link. The communication link 21 may be a wired link and/or wireless communication link. The communication link 21 may be a single hop communication link or a multi hop communication link. The wireless communication link may be carried over a short-range communication system, such as Bluetooth, Bluetooth low energy, IEEE 802.11, Zigbee. The hearing device 2 may configured to connect to the client device 10 over a network. The client device 10 may permit remote fitting of the hearing aid device where a dispenser connects to the hearing device via the client device 10 of the user. The client device 10 may comprise a computing device acting as a client, such as a fitting device 14 (e.g. a handheld device, a relay, a tablet, a personal computer, a mobile phone, and/or USB dongle plugged in a personal computer). The client device 10 may be configured to communicate with the server device 16 via a communication link 24, such as a bidirectional communication link. The communication link 24 may be a wired link and/or wireless communication link. The communication link 24 may comprise a network, such as the Internet. The client device 10 may be configured to communicate with the server device 16 for maintenance, and update purposes. The server device 16 may comprise a computing device configured to act as a server, i.e. to serve requests from the client device 10 and/or from the hearing device 2. The server device 16 may be controlled by the hearing device manufacturer. The server device 16 may be configured to communicate with the manufacturing device 12 via a communication link 22 for manufacturing maintenance, and/or operational purposes. The server device 16 and the manufacturing device 12 may be co-located and/or form one entity for manufacturing maintenance, and/or operational purposes of the hearing device 2.

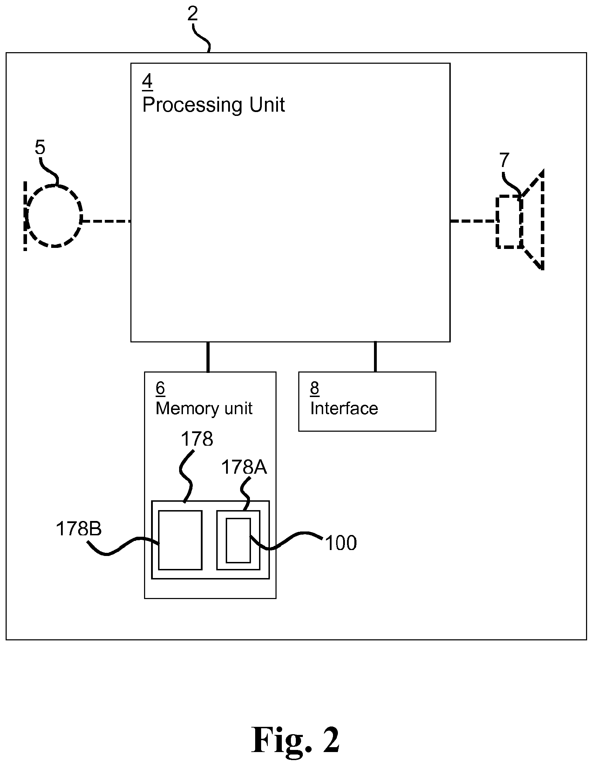

Fig. 2 schematically illustrates an exemplary hearing device 2. The hearing device 2 comprises a processing unit 4, a memory unit 6 and an interface 8. The hearing device 2 comprises a processing unit 4 configured to compensate for hearing loss of a user of the hearing device 2. The interface 8 optionally comprises a wireless transceiver, e.g. configured for wireless communication at frequencies in the range from 2.4 to 2.5 GHz. The interface 8 is configured for communication, such as wired and/or wireless communication, with a manufacturing device 12 and/or a client device 10. The processing unit 4 may be configured to compensate for hearing loss of a user of the hearing aid according to data received during manufacture. The hearing device 2 optionally comprises a microphone 5 or a plurality of microphones for receiving sound signal(s) and converting sound signal(s) into converted sound signal(s). In one or more exemplary hearing devices, a wireless transceiver of the interface may also provide one or more converted sound signal(s), e.g. from an external sound source such as a mobile phone or sound system with wireless transmitter. The converted sound signal(s) may be an electrical and/or digital version of the sound signal. The processing unit 4 is configured to receive and process the converted sound signal(s) into a processed sound signal according to a hearing loss of a user of the hearing device 2. The processed sound signal may be compressed and/or amplified or the like. The hearing device 2 comprises an output transducer/loudspeaker 7, known as a receiver. The receiver 7 is configured to receive the processed sound signal and convert the processed sound signal to an output sound signal for reception by an eardrum of the user. The hearing device is configured to operate according to security settings 178 of the hearing device. The security settings 178 comprises primary security settings 178A comprising hearing device certificate 100. Optionally, the security settings 178 comprises secondary security settings 178B. The memory unit 6 may include removable and non-removable data storage units including, but not limited to, Read Only Memory (ROM), Random Access Memory (RAM), etc.

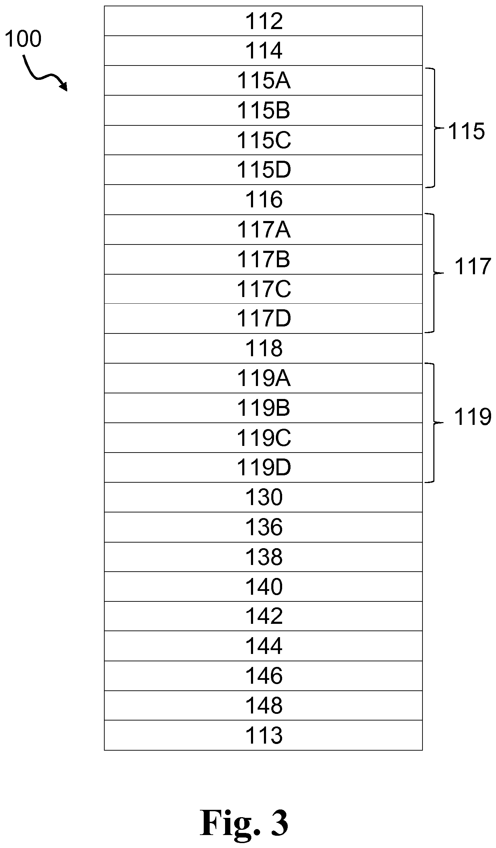

Fig. 3 schematically illustrates an exemplary hearing device certificate 100, e.g. forming part of primary security settings of the hearing device. The hearing device certificate 100 comprises a hearing device identifier 112, at least one hearing device key identifier including a first hearing device key identifier 114 indicative of a hearing device key. The hearing device certificate comprises a plurality of hearing device keys. The hearing device identifier 112 may refer to a unique or a pseudo-unique identifier. The first hearing device key identifier 114 is indicative of the first hearing device key(s) of the hearing device certificate. For example, the first hearing device key identifier 114 may be indicative of or point to a hearing device key of a first set 115 of hearing device keys (115A, 115B, 115C, 115D) of the hearing device certificate, e.g. the first primary hearing device key 115A. The hearing device certificate 100 optionally comprises two, three, four or more sets of hearing device keys enabling secure communication with different client devices/client device types. The hearing device certificate 100 comprises a first set 115 of hearing device keys including a first primary hearing device key 115A. The at least one hearing device key identifier comprises a first hearing device key identifier 114 indicative of a hearing device key of the first set 115 of hearing device keys 115A, 115B, 115C, 115D. The first set 115 of hearing device keys comprises for example first primary key 115A, first secondary key 115B, first tertiary key 115C, and first quaternary key 115D dedicated to securing communication to and from a first client device or a first client device type. For example, the first set 115 of hearing devices key may be a set of hearing device keys 115A, 115B, 115C, 115D for securing communication of hearing device data with the first client device.

The plurality of hearing device keys may comprise a second set 117 of hearing device keys including a second primary hearing device key 117A, a second secondary hearing device key 117B, a second tertiary hearing device key 117C, and/or a second quaternary hearing device key 117D. The at least one hearing device key identifier comprises a second hearing device key identifier 116 indicative of a hearing device key of the second set 117 of hearing device keys 117A, 117B, 117C, 117D. The hearing device is configured to communicate with one or more client devices, such as a first client device and/or a second client device. For each client device or client device type that the hearing device is configured to communicate with, the hearing device certificate optionally comprises a set of hearing device keys configured to enable secure communication with a specific client device or client device type. The hearing device certificate may comprise a third set 119 of hearing device keys including a third primary hearing device key 119A, a third secondary hearing device key 119B, a third tertiary hearing device key 119C, and/or a third quaternary hearing device key 119D. The at least one hearing device key identifier comprises a third hearing device key identifier 118 indicative of a hearing device key of the third set 119 of hearing device keys. The hearing device certificate 100 may comprise a fourth set of hearing device keys including a fourth primary hearing device key (not shown). The at least one hearing device key identifier comprises a fourth hearing device key identifier indicative of a hearing device key of the fourth set of hearing device keys. The hearing device 2 may be configured to select a set of hearing device keys based on the client device or the client device type connected to the hearing device and to select a hearing device key from the set of hearing device keys selected based on the hearing device key identifier associated with the selected set of hearing devices.

The hearing device certificate 100 comprises a certificate type identifier 130. The certificate type identifier 130 indicates that the hearing device certificate 100 is a hearing device certificate, e.g. selected amongst a variety of certificate types, such as a hearing device family certificate type, a hearing device certificate type, a firmware certificate type, a research and development certificate type, and a client device certificate type. The certificate type identifier 130 may be used to enable the hearing device 2 to identify what type of certificate it receives, stores, authenticates and/or retrieves. The hearing device certificate 100 may comprise a version identifier which indicates a data format version of the hearing device certificate. The hearing device 2 may use the certificate type identifier 130 and/or the version identifier to determine what type of data the hearing device certificate 100 comprises, what type of data is comprised in a field of the hearing device certificate 100. For example, the hearing device 2 may determine based on the certificate type identifier 130 and/or version identifier what field of the certificate comprises a digital signature 113, and which public key is needed to verify the digital signature 113. It may be envisaged that there is a one-to-one mapping between the certificate type identifier 130 and the public-private key pair used for generating the digital signature 113. The hearing device certificate 100 may comprise a length identifier that indicates the length of the hearing device certificate 100, e.g. in bits, bytes.

The hearing device certificate 100 optionally comprises a signing device identifier 136. The signing device identifier 136 refers to a unique identifier identifying the device (such as a manufacturing device 12, e.g. an integrated circuit card, a smart card, a hardware security module comprised in a manufacturing device 12) that has signed the hearing device certificate 100. The signing device identifier 136 may for example comprise a medium access control, MAC, address of the signing device, a serial number. The signing device identifier 136 allows for example the hearing device 2 to determine whether the signing device is e.g. black-listed or not, and thus to reject hearing device certificates 100 signed by a signing device that is black-listed.

The hearing device certificate 100 optionally comprises one or more hardware identifiers including a first hardware identifier 148 and/or a second hardware identifier (not shown). The hardware identifier 148 may identify a piece of hardware comprised in the hearing device 2, such as a processing unit 4, a radio chip comprised in the hearing device 2, a digital signal processor of the hearing device 2. The first hardware identifier 148 may also be stored in a register of the piece of hardware comprised in the hearing device 2 during manufacturing of the piece of hardware. The first hardware identifier 148 may comprise a serial number, a medium access control, MAC, address, a chip identifier, or any combination thereof. The hearing device certificate 100 may comprise a first hardware identifier 148, a second hardware identifier and/or a third hardware identifier. For example, the first hardware identifier 148 may provide a first hearing device specific value present in a register of a hardware module (e.g. the processing unit or the radio chip) of the hearing device 2 while the second hardware identifier may provide a second hearing device specific value present in a register of a hardware module of the hearing device 2, and a third hardware identifier may provide a third hardware module identifier (e.g. a processing unit identifier, a DSP identifier). The hearing device 2 may, e.g. at start-up, verify the hearing device certificate 100 by comparing its stored hardware identifier and the first hardware identifier 148 comprised in the hearing device certificate 100 received. This way, the hearing device 2 may determine if the hearing device certificate stored in the hearing device is intended for the hearing device 2 and reject the received hearing device certificate if the hardware identifiers of the hearing device certificate do not match the hardware module register values of hearing device hardware.

The hearing device certificate 100 optionally comprises a client device type authorization identifier 144. A client device type may comprise a model, category or type of client devices, such as a tablet product model, category or type, a USB dongle product model, category or type. The client device type authorization identifier 144 is an identifier of an authorized client device type, such as an identifier of the client device types that the hearing device 2 may authorize for communication, such as for fitting, maintenance and/or operation. The client device type authorization identifier 144 is for example a bit-field indicating the type of client device the hearing device 2 should allow for fitting.

The hearing device certificate 100 optionally comprises one or more of a hardware platform identifier 138, a software platform identifier 140, and/or a certificate timestamp 142. The hardware platform identifier 138 may identify a hardware platform, such as an operational hearing device hardware platform, i.e. a hardware platform on which the hearing device certificate may be used. The software platform identifier 140 may identify a family of software platforms on which the hearing device certificate is configured to operate. The certificate timestamp 142 refers to a timestamp of production or manufacture of the hearing device certificate 100, such as a timestamp of the manufacturing device 12 indicating a time instant when the hearing device certificate 100 is generated. The certificate timestamp 142 may be in form of e.g.: hour, min, date, month, year.

The hearing device certificate 100 comprises a digital signature 113 and/or a MAC. The digital signature 113 enables a proof or verification of authenticity and/or content of the hearing device certificate 100, such as verification of the signer legitimacy (e.g. whether the signer is a legitimate manufacturing device). The digital signature 113 is generated by the manufacturing device 12 using a device family private key during manufacturing of the hearing device.

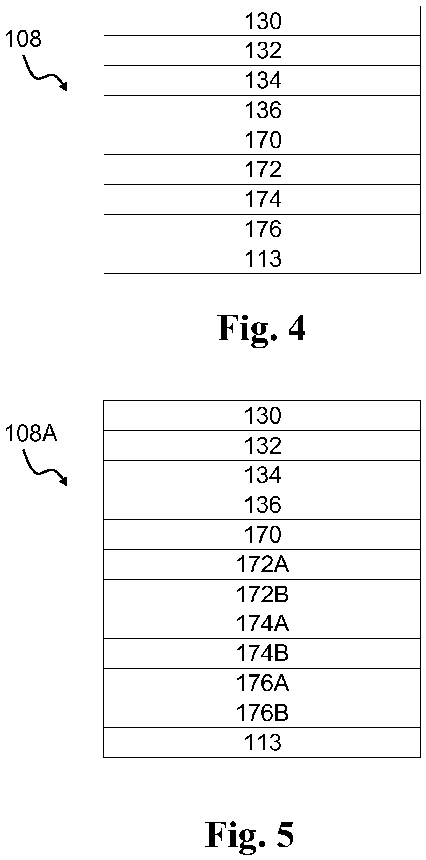

Fig. 4 schematically illustrates an exemplary security settings certificate 108. The security settings certificate 108 comprises a digital signature 113 and/or a MAC. The digital signature 113 enables a proof or verification of authenticity and/or content of the security settings certificate 108, such as verification of the signer legitimacy (e.g. whether the signer is a legitimate manufacturing device). The digital signature 113 is generated by a signing device using a security settings private key.

The security settings certificate 108 comprises a certificate type identifier 130. The certificate type identifier 130 indicates that the security settings certificate 108 is a security settings certificate, e.g. selected amongst a variety of certificate types, such as a hearing device family certificate type, a hearing device certificate type, a firmware certificate type, a research and development certificate type, a security settings certificate, and a client device certificate type. The certificate type identifier 130 may be used to enable the hearing device 2 to identify what type of certificate it receives, stores, authenticates and/or retrieves. The security settings certificate 108 may comprise a version identifier 132 indicative of data format version of the security settings certificate 108. The hearing device 2 may use the certificate type identifier 130 and/or the version identifier 132 to determine what type of data the security settings certificate 108 comprises, what type of data is comprised in a field of the hearing device certificate 100. The security settings certificate 108 may comprise a length identifier 134 that indicates the length of the security settings certificate 108, e.g. in bits, bytes. For example, the hearing device 2 may determine based on the certificate type identifier 130, the version identifier 132 and/or the length identifier 134 what field of the certificate 108 comprises digital signature 113, and which public key is needed to verify the digital signature 113. It may be envisaged that there is a one-to-one mapping between the certificate type identifier 130 and the public-private key pair used for generating the digital signature 113.

The security settings certificate 108 optionally comprises a signing device identifier 136. The signing device identifier 136 refers to a unique identifier identifying the device (such as a manufacturing device 12, e.g. an integrated circuit card, a smart card, a hardware security module comprised in a manufacturing device 12) that has signed the security settings certificate 108. The signing device identifier 136 may for example comprise a medium access control, MAC, address of the signing device, a serial number. The signing device identifier 136 allows for example the hearing device 2 to determine whether the signing device is e.g. black-listed or not, and thus to reject a security settings certificate 108 signed by a signing device that has been black-listed, e.g. based on signing device revocation identifier(s) of secondary security settings.

The security settings certificate 108 comprises a security update identifier 170. The security update identifier 170 allows for example the hearing device 2 to ensure that current security settings for the hearing device are not updated/replaced by outdated or old security settings. The security settings certificate 108 comprises one or more of a client device type revocation identifier 172, a client device revocation identifier 174 and/or a signing device revocation identifier 176. Thereby, the hearing device is able to black-list or revoke a client device type (i.e. a group of client devices), a specific client device and/or a signing device.

Fig. 5 schematically illustrates an exemplary security settings certificate 108A enabling black-listing or revocation of a plurality of client device types, client device and/or signing devices with a single security update. The security settings certificate 108A comprises a list or array of client device type revocation identifiers 172B and field with a number of client device type revocation identifiers 172A. The security settings certificate 108A comprises a list or array of client device revocation identifiers 174B and field with a number of client device revocation identifiers 174A. The security settings certificate 108A comprises a list or array of signing device revocation identifiers 176B and field with a number of signing device revocation identifiers 176A. Lists with client device type revocation identifier(s), client device revocation identifier(s) and/or signing device revocation identifier(s) may reduce the number of security updates. Further, a hearing device may be configured to delete previously stored revocation identifiers at security settings update. Further, a hearing device manufacturer does not have to rely on that previously sent security settings have been received and updated in the hearing device.

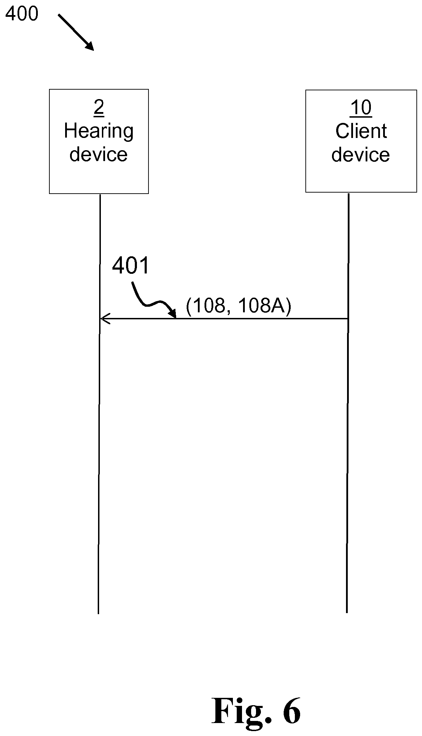

Fig. 6 shows an exemplary signalling diagram for updating security settings of a hearing device, such as hearing device 2. The hearing device 2 is configured to operate according to security settings of the hearing device, the security settings of the hearing device being stored in the memory unit. The hearing device comprises a processing unit configured to obtain new security settings 401 via an interface of the hearing device 2, e.g. as illustrated by receiving new security settings 401 from a client device 10. The new security settings 401 comprise a security settings certificate 108 or security certificate 108A. Upon receipt of the new security settings, the processing unit is configured to verify the new security settings. In one or more exemplary hearing devices, to verify the new security settings at least comprises to determine if the security update identifier 170 is valid and to verify the digital signature 113. Thus a number of sub-verifications may be performed to verify the new security settings. In one or more exemplary hearing devices, to verify the new security settings comprises to verify the certificate type identifier 130, to verify that the version identifier 132 is valid, to verify that the signing device identifier 136 of the security settings certificate is not black-listed, to verify/determine if the security update identifier 170 is valid and to verify the digital signature 113. If the new security settings are verified (verification criterion fulfilled), the processing unit of hearing device 2 is configured to update the security settings of the hearing device based on the new security settings.

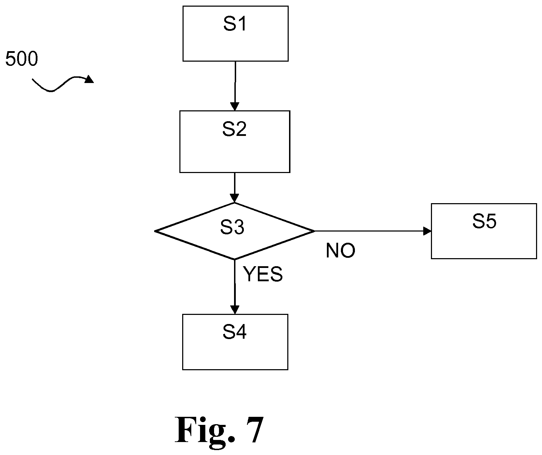

Fig. 7 is a flow diagram of an exemplary method of updating a hearing device comprising a processing unit configured to compensate for hearing loss of a user of the hearing device, a memory unit, and an interface, wherein the hearing device is configured to operate according to security settings of the hearing device. The method 500 comprises obtaining S1, e.g. receiving from a client device, new security settings via the interface and verifying S2 the new security settings. If the new security settings are verified S3, the method proceeds to updating S4 the security settings of the hearing device based on the new security settings. If the new security settings are not verified, the method proceeds to disregarding S5 the new security settings.

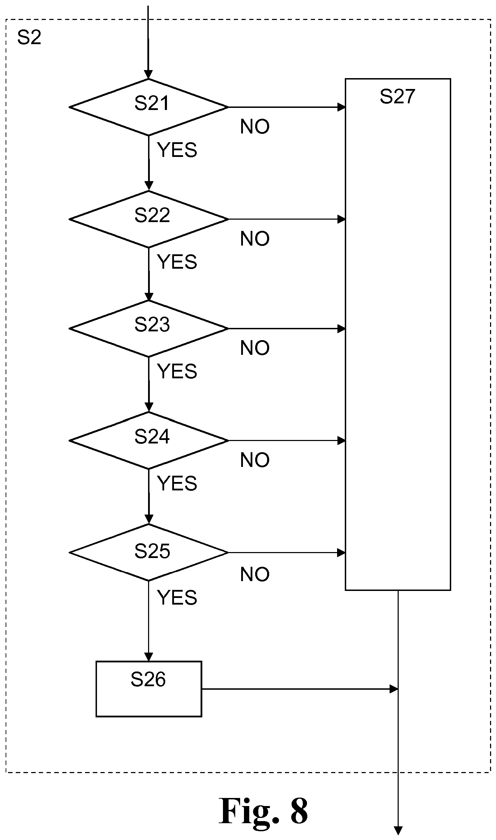

Fig. 8 is a flow diagram showing an example of verifying S2 the new security settings. Verifying S2 the new security settings comprises verifying S21 certificate type identifier of the new security settings. If the certificate type identifier is verified, verifying S2 optionally comprises verifying S22 version identifier of the new security settings, e.g. determine if the version identifier is supported by the firmware of the hearing device. If the version identifier is verified, verifying S2 comprises verifying S23 security update identifier of the new security settings, e.g. to determine if the security update identifier is valid based on a current security update identifier of the secondary security settings, for example if the security update identifier of the new security settings is larger than the current security update identifier of the secondary security settings. If the security update identifier is verified, verifying S2 comprises verifying S24 signing device identifier of the new security settings, e.g. it is verified that the signing device identifier is not black-listed, i.e. corresponds to a signing device revocation identifier of secondary security settings of the hearing device. If the signing device identifier is verified, verifying S2 comprises verifying S25 digital signature of new security settings, e.g. using a security settings public key. If the digital signature is verified, the new security settings are verified S26. If any of the acts of verifying S21, S22, S23, S24, S25 results in non-verification, the new security settings are not verified S27. In one or more exemplary methods, S21 and/or S22 are omitted. The order of verifying S21, S22, S23, S24, S25 may be changed.

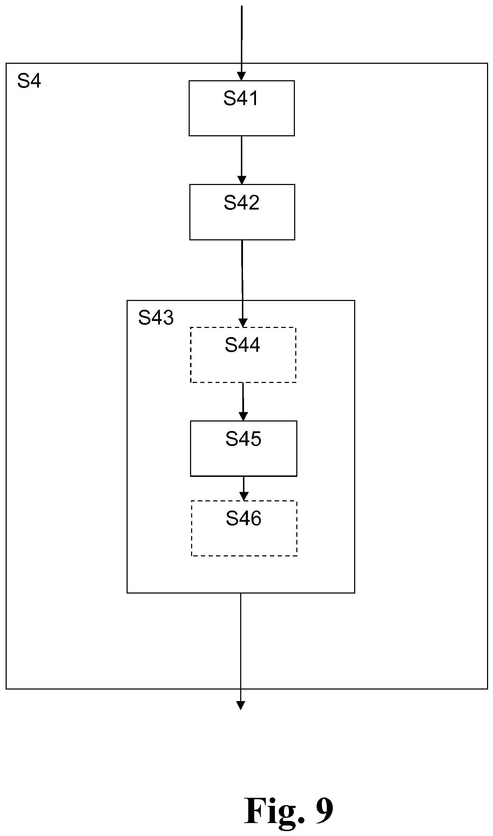

Fig. 9 is a flow diagram showing an example of updating S4 the security settings of the hearing device based on the new security settings. Updating S4 the security settings of the hearing device comprises determining S41 future hearing device key identifier(s) based on new first hearing device key identifier(s) of the new security settings, hearing device key identifier(s) of the primary security settings/hearing device certificate and/or current hearing device key identifier(s) of secondary security settings of the hearing device. Updating S4 the security settings of the hearing device comprises storing S42 the future hearing device key identifier(s) as current hearing device key identifier(s) in the memory unit of the hearing device. Updating S4 the security settings of the hearing device may comprise updating S43 revocation identifier(s) of the new security settings. Optionally, the method comprises selecting S44 which revocation identifer(s) or list of revocation identifiers are to be updated, e.g. based on the new security settings. For example, if a field 172A, 174A, 176A indicative of the number of revocation identifiers is set to a default value, e.g. zero, no update of the respective revocation identifier or list of revocation identifiers should be updated. Updating S43 revocation identifier(s) of the new security settings comprises storing S45 the revocation identifiers of the new security settings or the selected revocation identifiers in the secondary security settings of the memory unit. In an exemplary method, updating S43 revocation identifier(s) of the new security settings optionally comprises deleting S46 previously stored revocation identifier(s).

It is to be noted that the use of the terms "first", "second", "primary", "secondary", "tertiary", "quaternary" and the like does not imply any particular order, but they are included to identify individual elements. Moreover, the use of the terms first, second, etc. does not denote any order or importance, but rather the terms first, second, etc. are used to distinguish one element from another. Note that the words first and second are used here and elsewhere for labelling purposes only and are not intended to denote any specific spatial or temporal ordering. Furthermore, the labelling of a first element does not imply the presence of a second element.

Although particular features have been shown and described, it will be understood that they are not intended to limit the claimed invention. The specification and drawings are, accordingly to be regarded in an illustrative rather than restrictive sense.

## Claims

1. A hearing device (2) comprising
- a processing unit (4) configured to compensate for hearing loss of a user of the hearing device;
- a memory unit (6); and
- an interface (8),
wherein the hearing device is configured to operate according to security settings (178) of the hearing device, the security settings (178) of the hearing device being stored in the memory unit (6), **characterized in that** the security settings (178) comprise primary security settings (178A) including a hearing device certificate (100), the hearing device certificate (100) comprising a plurality of hearing device keys (115) and a first hearing device key identifier (114), and wherein the processing unit is configured to
- obtain new security settings (401) via the interface, the new security settings comprising a new first hearing device key identifier indicative of a hearing device key;
- verify the new security settings (401) based on the primary security settings of the hearing device, wherein to verify the new security settings comprises to validate the new first hearing device key identifier, wherein to verify the new security settings comprises to determine if the new first hearing device key identifier is valid based on the first hearing device key identifier (114), wherein the new first hearing device key identifier is not valid if the new first hearing device key identifier is smaller than the first hearing device key identifier of the hearing device certificate; and
- update, if the new security settings are verified, the security settings (178) of the hearing device based on the new security settings (401), wherein to update the security settings of the hearing device comprises to include the new first hearing device key identifier in the security settings of the hearing device by storing the new first hearing device key identifier as a current first hearing device key identifier in secondary security settings (178B) of the security settings (178).

2. Hearing device according to claim 1, wherein the new security settings comprise a digital signature, and wherein to verify the new security settings comprises to verify the digital signature of the new security settings.

3. Hearing device according to any of the preceding claims, wherein the new security settings are verified if the new first hearing device key identifier is valid.

4. Hearing device according to any of the preceding claims, wherein the hearing device is configured to verify the new security settings based on the secondary security settings (178B) of the hearing device.

5. Hearing device according to claim 4, wherein the new security settings comprise a security update identifier, and wherein to verify the new security settings comprises to determine if the security update identifier is valid based on the secondary security settings.

6. Hearing device according to any of the preceding claims, wherein the new security settings comprise one or more client device type revocation identifiers and/or one or more client device revocation identifiers, and/or one or more signing device revocation identifiers.

7. Hearing device according to claim 6, wherein to update the security settings of the hearing device comprises to update one or more client device type revocation identifiers and/or one or more client device revocation identifiers , and/or one or more signing device revocation identifiers in secondary security settings of the hearing device.

8. A method (500) of updating a hearing device comprising a processing unit configured to compensate for hearing loss of a user of the hearing device, a memory unit, and an interface, wherein the hearing device is configured to operate according to security settings of the hearing device, the security settings of the hearing device being stored in the memory unit, **characterized in that** the security settings comprise primary security settings including a hearing device certificate (100), the hearing device certificate (100) comprising a plurality of hearing device keys (115) and a first hearing device key identifier (114), the method comprising:
- obtaining (S1) new security settings via the interface, the new security settings comprising a new first hearing device key identifier indicative of a hearing device key;
- verifying (S2) the new security settings based on the primary security settings of the hearing device, wherein verifying the new security settings comprises validating the new first hearing device key identifier, wherein verifying the new security settings comprises determining if the new first hearing device key identifier is valid based on the first hearing device key identifier of the primary security settings, wherein the new first hearing device key identifier is not valid if the new first hearing device key identifier is smaller than the first hearing device key identifier of the hearing device certificate; and
- updating (S4), if the new security settings are verified (S3), the security settings of the hearing device based on the new security settings, wherein updating the security settings of the hearing device comprises to include the new first hearing device key identifier in the security settings of the hearing device by storing the new first hearing device key identifier as a current first hearing device key identifier in secondary security settings of the security settings.

9. Method according to claim 8, wherein the new security settings comprise a digital signature, and wherein verifying the new security settings comprises verifying the digital signature of the new security settings.

10. Method according to any of claims 8-9, wherein the new security settings are verified if the new first hearing device key identifier is valid.

11. Hearing device according to anyone of claims 1 - 7, wherein the first hearing device key identifier (114) identifies one of the plurality of hearing device keys (115) of the hearing device certificate (100).

12. Hearing device according to anyone of claims 1 - 7 or 11, wherein the hearing device certificate (100) comprises a certificate type identifier indicating a type of the hearing device certificate amongst a variety of certificate types.

13. Hearing device according to anyone of claims 1 - 7 or 11 - 12, wherein the hearing device certificate comprises one or more hardware identifiers (148) identifying a piece of hardware comprised in the hearing device (2).

14. Hearing device according to anyone of claims 1 - 7 or 11 - 13, wherein the new security settings (401) comprises a security settings certificate (108) comprising a certificate type identifier indicating a type of the security settings certificate amongst a variety of certificate types.

## Patentansprüche

1. Hörgerät (2), umfassend
- eine Verarbeitungseinheit (4), die dazu konfiguriert ist, einen Hörverlust eines Benutzers des Hörgeräts zu kompensieren;
- eine Speichereinheit (6); Und
- eine Schnittstelle (8),
wobei das Hörgerät konfiguriert ist, gemäß Sicherheitseinstellungen (178) des Hörgeräts zu arbeiten, wobei die Sicherheitseinstellungen (178) des Hörgeräts in der Speichereinheit (6) gespeichert sind, **dadurch gekennzeichnet, dass** die Sicherheitseinstellungen (178) umfassen primäre Sicherheitseinstellungen (178A), die ein Hörgerätezertifikat (100) umfassen, wobei das Hörgerätezertifikat (100) mehrere Hörgeräteschlüssel (115) und eine erste Hörgeräteschlüsselkennung (114) umfasst, und wobei die Verarbeitungseinheit konfiguriert ist zu
- neue Sicherheitseinstellungen (401) über die Schnittstelle zu erhalten, wobei die neuen Sicherheitseinstellungen eine neue erste Hörgeräteschlüsselkennung umfassen, die einen Hörgeräteschlüssel angibt;
- Verifizieren der neuen Sicherheitseinstellungen (401) basierend auf den primären Sicherheitseinstellungen des Hörgeräts, wobei das Verifizieren der neuen Sicherheitseinstellungen das Validieren der neuen ersten Hörgeräteschlüsselkennung umfasst, wobei das Verifizieren der neuen Sicherheitseinstellungen umfasst, zu bestimmen, ob die neue erste Hörgeräteschlüsselkennung gültig ist basierend auf der ersten Hörgeräteschlüsselkennung (114), wobei die neue erste Hörgeräteschlüsselkennung nicht gültig ist, wenn die neue erste Hörgeräteschlüsselkennung kleiner als die erste Hörgeräteschlüsselkennung des Hörgerätezertifikats ist; und
- Aktualisieren, falls die neuen Sicherheitseinstellungen verifiziert sind, der Sicherheitseinstellungen (178) des Hörgeräts basierend auf den neuen Sicherheitseinstellungen (401), wobei das Aktualisieren der Sicherheitseinstellungen des Hörgeräts das Einbeziehen des neuen ersten Hörgeräteschlüsselkennung in den Sicherheitseinstellungen des Hörgeräts umfasst durch Speichern der neuen ersten Hörgeräteschlüsselkennung als aktuelle erste Hörgeräteschlüsselkennung in sekundären Sicherheitseinstellungen (178B) der Sicherheitseinstellungen (178).

2. Hörgerät nach Anspruch 1, wobei die neuen Sicherheitseinstellungen eine digitale Signatur umfassen, und wobei das Verifizieren der neuen Sicherheitseinstellungen das Verifizieren der digitalen Signatur der neuen Sicherheitseinstellungen umfasst.

3. Hörgerät nach einem der vorhergehenden Ansprüche, wobei die neuen Sicherheitseinstellungen verifiziert werden, wenn die neue erste Hörgeräteschlüsselkennung gültig ist.

4. Hörgerät nach einem der vorhergehenden Ansprüche, wobei das Hörgerät konfiguriert ist, die neuen Sicherheitseinstellungen basierend auf den sekundären Sicherheitseinstellungen (178B) des Hörgeräts zu verifizieren.

5. Hörgerät nach Anspruch 4, wobei die neuen Sicherheitseinstellungen eine Sicherheitsaktualisierungskennung umfassen, und wobei das Verifizieren der neuen Sicherheitseinstellungen umfasst, zu bestimmen, ob die Sicherheitsaktualisierungskennung basierend auf den sekundären Sicherheitseinstellungen gültig ist.

6. Hörgerät nach einem der vorhergehenden Ansprüche, wobei die neuen Sicherheitseinstellungen einen oder mehrere Klient-Gerätetyp-Widerrufsidentifizierer und/oder einen oder mehrere Klient-Geräte-Widerrufsidentifizierer und/oder einen oder mehrere Signiergeräte-Widerrufsidentifizierer umfassen.

7. Hörgerät nach Anspruch 6, wobei das Aktualisieren der Sicherheitseinstellungen des Hörgeräts das Aktualisieren einer oder mehrerer Klient-Gerätetyp-Widerrufsidentifizierer und/oder einer oder mehrerer Klient-Geräte-Widerrufsidentifizierer und/oder einer oder mehrerer Signiergeräte-Widerrufsidentifizierer in sekundären Sicherheitseinstellungen des Hörgeräts umfasst.

8. Verfahren (500) zum Aktualisieren eines Hörgeräts, umfassend eine Verarbeitungseinheit, die konfiguriert ist, um einen Hörverlust eines Benutzers des Hörgeräts zu kompensieren, eine Speichereinheit und eine Schnittstelle, wobei das Hörgerät konfiguriert ist, gemäß Sicherheitseinstellungen zu arbeiten des Hörgeräts, wobei die Sicherheitseinstellungen des Hörgeräts in der Speichereinheit gespeichert sind, **dadurch gekennzeichnet, dass** die Sicherheitseinstellungen primäre Sicherheitseinstellungen umfassen, die ein Hörgerätezertifikat (100) umfassen, wobei das Hörgerätezertifikat (100) mehrere Hörgeräteschlüssel (115) und eine erste Hörgeräteschlüsselkennung (114) umfasst, wobei das Verfahren umfasst:
- Erhalten (S1) neuer Sicherheitseinstellungen über die Schnittstelle, wobei die neuen Sicherheitseinstellungen eine neue erste Hörgeräteschlüsselkennung umfassen, die einen Hörgeräteschlüssel angibt;
- Verifizieren (S2) der neuen Sicherheitseinstellungen basierend auf den primären Sicherheitseinstellungen des Hörgeräts, wobei das Verifizieren der neuen Sicherheitseinstellungen das Validieren der neuen ersten Hörgeräteschlüsselkennung umfasst, wobei das Verifizieren der neuen Sicherheitseinstellungen umfasst, zu bestimmen, ob das neue erste Hörgeräteschlüsselkennung basierend auf der ersten Hörgeräteschlüsselkennung der primären Sicherheitseinstellungen gültig ist, wobei die neue erste Hörgeräteschlüsselkennung nicht gültig ist, wenn die neue erste Hörgeräteschlüsselkennung kleiner als die erste Hörgeräteschlüsselkennung des Hörgerätezertifikats ist; und
- Aktualisieren (S4), wenn die neuen Sicherheitseinstellungen verifiziert sind (S3), der Sicherheitseinstellungen des Hörgeräts basierend auf den neuen Sicherheitseinstellungen, wobei das Aktualisieren der Sicherheitseinstellungen des Hörgeräts das Einschließen der neuen ersten Hörgeräteschlüsselkennung umfasst in den Sicherheitseinstellungen des Hörgeräts durch Speichern der neuen ersten Hörgeräteschlüsselkennung als aktuelle erste Hörgeräteschlüsselkennung in sekundären Sicherheitseinstellungen der Sicherheitseinstellungen.

9. Verfahren nach Anspruch 8, wobei die neuen Sicherheitseinstellungen eine digitale Signatur umfassen und wobei das Verifizieren der neuen Sicherheitseinstellungen das Verifizieren der digitalen Signatur der neuen Sicherheitseinstellungen umfasst.

10. Verfahren nach einem der Ansprüche 8-9, wobei die neuen Sicherheitseinstellungen verifiziert werden, wenn die neue erste Hörgeräteschlüsselkennung gültig ist.

11. Hörgerät nach einem der Ansprüche 1-7, wobei die erste Hörgeräteschlüsselkennung (114) einen der mehreren Hörgeräteschlüssel (115) des Hörgerätezertifikats (100) identifiziert.

12. Hörgerät nach einem der Ansprüche 1-7 oder 11, wobei das Hörgerätzertifikat (100) eine Zertifikattypkennung umfasst, die einen Typ des Hörgerätzertifikats unter einer Vielzahl von Zertifikattypen angibt.

13. Hörgerät nach einem der Ansprüche 1-7 oder 11-12, wobei das Hörgerätezertifikat einen oder mehrere Hardware-Identifizierer (148) umfasst, die ein in dem Hörgerät (2) enthaltenes Hardwarestück identifizieren.

14. Hörgerät nach einem der Ansprüche 1-7 oder 11-13, wobei die neuen Sicherheitseinstellungen (401) ein Sicherheitseinstellungszertifikat (108) umfassen, das eine Zertifikattypkennung umfasst, die einen Typ des Sicherheitseinstellungszertifikats unter einer Vielzahl von Zertifikatstypen angibt.

## Revendications

1. Un appareil auditif (2) comprenant
- une unité de traitement (4) configurée pour compenser la perte auditive d'un utilisateur du dispositif auditif ;
- une unité de mémoire (6) ; et
- une interface (8),
dans lequel l'appareil auditif est configuré pour fonctionner selon les paramètres de sécurité (178) de l'appareil auditif, les paramètres de sécurité (178) de l'appareil auditif étant stockés dans l'unité de mémoire (6), **caractérisé en ce que** les paramètres de sécurité (178) comprennent paramètres de sécurité primaires (178A) comprenant un certificat d'appareil auditif (100), le certificat d'appareil auditif (100) comprenant une pluralité de clés d'appareil auditif (115) et un premier identifiant de clé d'appareil auditif (114), et dans lequel l'unité de traitement est configurée pour
- obtenir de nouveaux paramètres de sécurité (401) via l'interface, les nouveaux paramètres de sécurité comprenant un nouveau premier identifiant de clé de l'appareil auditif d'une clé d'appareil auditif ;
- vérifier les nouveaux paramètres de sécurité (401) sur la base des paramètres de sécurité primaires de l'appareil auditif, dans lequel la vérification des nouveaux paramètres de sécurité comprend la validation du nouveau premier identifiant de clé de l'appareil auditif, dans lequel la vérification des nouveaux paramètres de sécurité comprend la détermination si le nouveau premier identifiant de clé d'appareil auditif est valide sur la base du premier identifiant de clé d'appareil auditif (114), dans lequel le nouveau premier identifiant de clé d'appareil auditif n'est pas valide si le nouveau premier identifiant de clé d'appareil auditif est inférieur au premier identifiant de clé d'appareil auditif du certificat d'appareil auditif ; et
- mettre à jour, si les nouveaux paramètres de sécurité sont vérifiés, les paramètres de sécurité (178) de l'appareil auditif sur la base des nouveaux paramètres de sécurité (401), dans lequel la mise à jour des paramètres de sécurité de l'appareil auditif comprend l'inclusion du nouveau premier identifiant de clé de l'appareil auditif dans les paramètres de sécurité de l'appareil auditif en stockant le nouveau premier identifiant de clé de l'appareil auditif en tant qu'identifiant de clé de premier appareil auditif actuel dans des paramètres de sécurité secondaires (178B) des paramètres de sécurité (178).

2. Appareil auditif selon la revendication 1, dans lequel les nouveaux paramètres de sécurité comprennent une signature numérique, et dans lequel vérifier les nouveaux paramètres de sécurité comprend de vérifier la signature numérique des nouveaux paramètres de sécurité.

3. Appareil auditif selon l'une quelconque des revendications précédentes, dans lequel les nouveaux paramètres de sécurité sont vérifiés si le nouveau premier identifiant de clé d'appareil auditif est valide.

4. Appareil auditif selon l'une quelconque des revendications précédentes, dans lequel l'appareil auditif est configuré pour vérifier les nouveaux paramètres de sécurité sur la base des paramètres de sécurité secondaires (178B) de l'appareil auditif.

5. Appareil auditif selon la revendication 4, dans lequel les nouveaux paramètres de sécurité comprennent un identifiant de mise à jour de sécurité, et dans lequel vérifier les nouveaux paramètres de sécurité comprend de déterminer si l'identifiant de mise à jour de sécurité est valide sur la base des paramètres de sécurité secondaires.

6. Appareil auditif selon l'une quelconque des revendications précédentes, dans lequel les nouveaux paramètres de sécurité comprennent un ou plusieurs identifiants de révocation de type d'appareil client et/ou un ou plusieurs identifiants de révocation d'appareil client et/ou un ou plusieurs identifiants de révocation d'appareil signataire.

7. Appareil auditif selon la revendication 6, dans lequel la mise à jour des paramètres de sécurité de l'appareil auditif comprend la mise à jour d'un ou plusieurs identifiants de révocation de type d'appareil client et/ou d'un ou plusieurs identifiants de révocation d'appareil client, et/ou d'un ou plusieurs identifiants de révocation d'appareil de signataire dans les paramètres de sécurité secondaires de l'appareil auditif.

8. Procédé (500) de mise à jour d'un appareil auditif comprenant une unité de traitement configurée pour compenser la perte auditive d'un utilisateur de l'appareil auditif, une unité de mémoire et une interface, dans lequel l'appareil auditif est configuré pour fonctionner selon des paramètres de sécurité de l'appareil auditif, les paramètres de sécurité de l'appareil auditif étant stockés dans l'unité de mémoire, **caractérisé en ce que** les paramètres de sécurité comprennent des paramètres de sécurité primaires comprenant un certificat d'appareil auditif (100), le certificat d'appareil auditif (100) comprenant pluralité de clés d'appareil auditif (115) et un premier identifiant de clé d'appareil auditif (114), le procédé comprenant :
- obtenir (S1) de nouveaux paramètres de sécurité via l'interface, les nouveaux paramètres de sécurité comprenant un nouveau premier identifiant de clé de l'appareil auditif indicatif d'une clé d'appareil auditif ;
- vérifier (S2) les nouveaux paramètres de sécurité sur la base des paramètres de sécurité primaires de l'appareil auditif, dans lequel la vérification des nouveaux paramètres de sécurité comprend la validation du nouveau premier identifiant de clé d'appareil auditif, dans lequel la vérification des nouveaux paramètres de sécurité comprend la détermination si le nouveau premier identifiant de clé de l'appareil auditif est valide sur la base du premier identifiant de clé d'appareil auditif des paramètres de sécurité primaires, dans lequel le nouveau premier identifiant de clé d'appareil auditif n'est pas valide si le nouveau premier identifiant de clé d'appareil auditif est inférieur au premier identifiant de clé d'appareil auditif du certificat d'appareil auditif; et
- mettre à jour (S4), si les nouveaux paramètres de sécurité sont vérifiés (S3), les paramètres de sécurité de l'appareil auditif sur la base des nouveaux paramètres de sécurité, dans lequel la mise à jour des paramètres de sécurité de l'appareil auditif comprend l'inclusion du nouveau premier identifiant de clé d'appareil auditif dans les paramètres de sécurité de l'appareil auditif en stockant le nouveau premier identifiant de clé d'appareil auditif en tant qu'identifiant de clé de premier appareil auditif actuel dans des paramètres de sécurité secondaires des paramètres de sécurité.

9. Procédé selon la revendication 8, dans lequel les nouveaux paramètres de sécurité comprennent une signature numérique, et dans lequel la vérification des nouveaux paramètres de sécurité comprend la vérification de la signature numérique des nouveaux paramètres de sécurité.

10. Procédé selon l'une quelconque des revendications 8 à 9, dans lequel les nouveaux paramètres de sécurité sont vérifiés si le nouveau premier identifiant de clé d'appareil auditif est valide.

11. Appareil auditif selon l'une quelconque des revendications 1 à 7, dans lequel le premier identifiant de clé d'appareil auditif (114) identifie l'une de la pluralité de clés d'appareil auditif (115) du certificat d'appareil auditif (100).

12. Appareil auditif selon l'une quelconque des revendications 1 à 7 ou 11, dans lequel le certificat d'appareil auditif (100) comprend un identifiant de type de certificat indiquant un type de certificat d'appareil auditif parmi une variété de types de certificats.

13. Appareil auditif selon l'une quelconque des revendications 1 à 7 ou 11 à 12, dans lequel le certificat d'appareil auditif comprend un ou plusieurs identifiants de matériel (148) identifiant un élément matériel compris dans l'appareil auditif (2).

14. Appareil auditif selon l'une quelconque des revendications 1 à 7 ou 11 à 13, dans lequel les nouveaux paramètres de sécurité (401) comprennent un certificat de paramètres de sécurité (108) comprenant un identifiant de type de certificat indiquant un type de certificat de paramètres de sécurité parmi une variété de types de certificats.
